# EUROPEAN PATENT APPLICATION

(11) **EP 4 841 294 A1**
(43) Date of publication of application: **18.11.2026**
(21) Application number: 25225450.3
(22) Date of filing: 19.12.2025
(51) Int. Cl.: G01S 7/00, G01S 7/41, G01S 13/86, G01S 13/87, G01S 13/88, G01S 13/90

(54) **UNMANNED VEHICLE FOR SECURITY SCREENING**

(30) Priority: 14.05.2025 US 202519207938
(71) Applicant: Rohde & Schwarz GmbH & Co. KG, 81671 München (DE)
(72) Inventor: Gareis, Dr. Matthias, 90489 Nürnberg (DE); Radzinski, Maya, Columbia, MD 21046 (US)
(74) Representative: Rupp, Christian

(57) **Abstract**

The disclosure relates to an unmanned vehicle (10) for security screening. The unmanned vehicle (10) is configured to autonomously move through an environment, and comprises a millimeter wave imaging device (11) configured to acquire imaging data of at least one person or object (13) in the environment.

## Description

### TECHNICAL FIELD

The present disclosure relates to security screening of people and objects, e.g., for threat and/or contraband detection.

### BACKGROUND

Security scanners which operate with millimeter wave radiation are commonly used for threat detection at security checkpoints, e.g., in airports. However, these scanners are only arranged in specific locations and take up a significant amount of space. As people have to enter such scanners one after the other, there can be long queues if many people have to be scanned.

Besides using permanently installed scanners, security checks and searches can be carried out by security personnel. However, this is cumbersome and involves a certain risk for the personnel.

### SUMMARY

In view of the above, the present disclosure aims to provide a safe and flexible way of security screening people and objects in an environment.

These and other objectives are achieved by the solution provided in the enclosed independent claims. Advantageous implementations of the present disclosure are further defined in the dependent claims.

According to a first aspect, the present disclosure relates to an unmanned vehicle for security screening, wherein the unnamed vehicle is configured to autonomously move through an environment. The unmanned vehicle comprises a millimeter wave imaging device configured to acquire imaging data of at least one person or object in the environment.

This achieves the advantage that people and objects in the environment can be screened in an efficient manner using millimeter wave imaging without being limited to a specific screening area or requiring security personnel.

The millimeter wave (mmWave) imaging device may comprise a transmitter configured to emit radar signals, in particular mmWave signals, towards an area to be scanned, and a receiver configured to receive reflected radar signals, in particular reflected mmWave signals.

The imaging data can be mmWave imaging data. The imaging data can comprise the received radar signals, in particular the received mmWave signals, or can be derived from said signals.

In an implementation form, the millimeter wave imaging device is configured to generate an image of the at least one person or object based on the imaging data; and/or the unmanned vehicle comprises a communication interface configured to forward the imaging data to an external processing system.

The image can be a microwave or more specifically a mmWave image of the person or object. The imaging device can capture a plurality of images, e.g. a series of images, of the person or the object.

In case the imaging data is forwarded to the external processing system, this system can be configured to generate the image based on the data. For instance, the external processing system is a central unit or control station which is in communication with one or more unmanned vehicles.

In an implementation form, the unmanned vehicle comprises an image processing device configured to analyze the image in order to identify at least one security-relevant item in the image. In addition or alternatively, this image processing can be carried out by the external processing system.

In an implementation form, the image processing device is configured to execute an artificial intelligence model to identify the at least one security-relevant item in the image. This achieves the advantage that security-relevant items can be detected with high accuracy. In addition or alternatively, the external image processing system could execute such an artificial intelligence model.

For example, the artificial intelligence model is configured to determine the type of the security-relevant object and/or to identify the security-relevant item in the captured image.

The security-relevant item can be a threat object, e.g. a weapon or explosive, or a contraband object, e.g. drugs. The unmanned vehicle could transmit an alarm signal if such a security-relevant item is detected.

In an implementation form, the unmanned vehicle is configured to move along a movement path while acquiring the imaging data. For example, the millimeter wave imaging device is configured to generate the image by combining imaging data collected from different positions along the movement path. This achieves the advantage that the image can be generated with a high resolution and SNR (signal-to-noise ratio) based on signals received at different locations.

The movement path can be straight or curved.

In an implementation form, the millimeter wave imaging device is configured to generate the image using any one of the following techniques: a synthetic-aperture radar (SAR) technique, an inverse synthetic-aperture radar (ISAR) technique, or a coherent or non-coherent superposition of received radar signals, in particular mmWave signals. This achieves the advantage that the image of the person or object can be captured with an increase resolution and/or SNR.

In an implementation form, the unmanned vehicle further comprises at least one interface configured to interact with the at least one person or object. For example, by means of the interface the vehicle can interact with people in the environment before or after they have been screened.

In an implementation form, the at least one interface comprises at least one of: a loudspeaker, a microphone, a screen, a touchscreen and a keyboard.

In an implementation form, the unmanned vehicle further comprises at least one additional sensor configured to capture an optical, an infrared and/or an ultrasound image of the at least one person or object.

These additional images could be combined with the mmWave image in order to obtain additional information.

In an implementation form, the unmanned vehicle further comprises a localization device configured to determine a location of the unmanned vehicle in the environment.

For example, the localization device comprises at least one of: an optical camera, an infrared camera, a satellite localization unit, a step engine, a simultaneous-localization-and-mapping (SLAM) unit, and a radar.

In an implementation form, the unmanned vehicle is a ground vehicle or an aerial vehicle.

For example, the unmanned vehicle is a robot which moves through the environment using wheels, tracks or legs. Alternatively, the unmanned vehicle can be a drone which flies or hovers through the environment.

In an implementation form, the unmanned vehicle further comprises a processor configured to execute at least one further artificial intelligence model configured to control a movement of the unmanned vehicle through the environment and/or to control an interaction of the unmanned vehicle with the environment.

Additional artificial intelligence models could be employed for localization of the vehicle in the environment.

According to a second aspect, the present disclosure relates to a system comprising at least two unmanned vehicles according to the first aspect of the disclosure.

In an implementation form of the system, the respective millimeter wave imaging devices of the at least two unmanned vehicles are configured to acquire imaging data of the at least one person or object in a synchronized manner. This achieves the advantage that an image with a higher resolution and SNR can be captured based on signals received with two or more millimeter wave imaging devices.

The millimeter wave imaging devices of the vehicles can be synchronized with respect to a common clock. For instance, the synchronization allows for a coherent overlay of the imaging data received by each millimeter wave imaging device.

In an implementation form, the system further comprises a control station configured to control and/or synchronize the at least two unmanned vehicles.

### BRIEF DESCRIPTION OF THE DRAWINGS

The above-described aspects and implementations are explained in the following description of embodiments with respect to the enclosed drawings:
- Fig. 1: shows a schematic diagram of an unmanned vehicle for security screening according to an embodiment;
- Fig. 2: shows a schematic 3D model of an unmanned vehicle for security screening according to an embodiment;
- Fig. 3: shows a schematic diagram of an unmanned vehicle according to an embodiment;
- Figs. 4A-4B: show exemplary movement paths of an unmanned vehicle; and
- Fig. 5: shows a schematic diagram of a system comprising at least two unmanned vehicles according to an embodiment.

### DETAILED DESCRIPTION OF EMBODIMENT

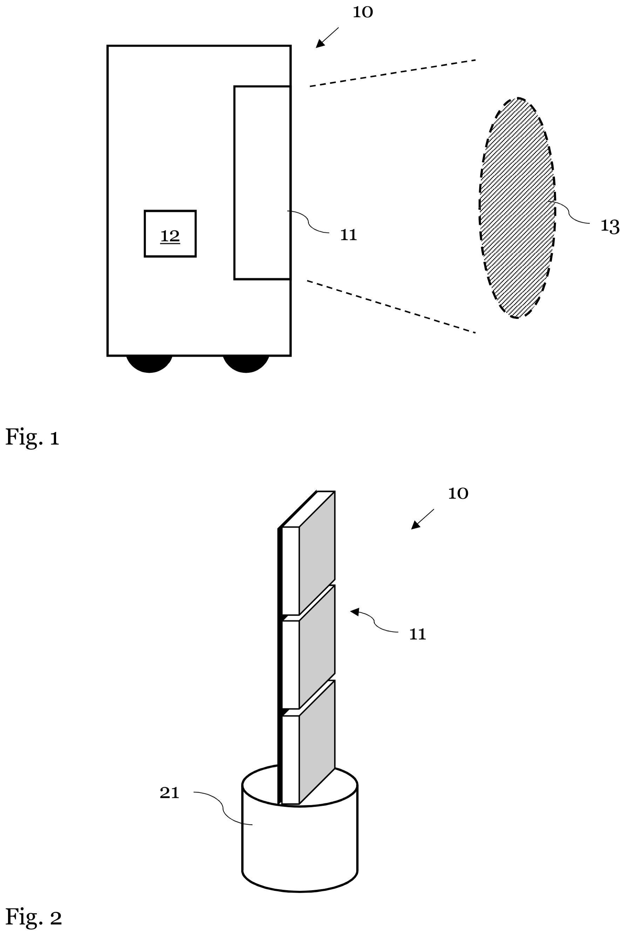

Fig. 1 shows a schematic diagram of an unmanned vehicle 10 for security screening according to an embodiment. The unmanned vehicle 10 is configured to autonomously move through an environment, and comprises a millimeter wave imaging device 11 configured to acquire imaging data of at least one person or object 13 in the environment.

The millimeter wave (mmWave) imaging device 11 may comprise mmWave imaging hardware, such as UWB or E-band radar modules. For instance, the mmWave imaging device 11 comprises a transmitter configured to emit radar signals, in particular mmWave signals, towards an area to be scanned, and a receiver configured to receive reflected radar signals, in particular reflected mmWave signals. The mmWave imaging device 11 can be an mmWave scanner.

For instance, the mmWave imaging device 11 comprises at least one Tx antenna and at least one Rx antenna for transmitting respectively receiving the radar signals. The at least one Tx and Rx antennas can be arranged in at least one antenna array. The antenna array may be arranged vertically, such that a person or object 13 standing in front of the vehicle 10 can be scanned.

The imaging data may refer to the data collected during an imaging of the person and/or object 13 by the imaging device 11. The imaging data can be microwave or more specifically mmWave imaging data. The imaging data can comprise the received radar signals, in particular the received mmWave signals, or can be derived from said signals.

The millimeter wave imaging device 11 of the unmanned vehicle 10 may be configured to generate an image of the at least one person or object 13 based on the imaging data. For example, the millimeter wave imaging device 11 comprises an image generation unit for generating the image from the imaging data.

The captured image can be a microwave or more specifically an mmWave image of the person or the object 13. The imaging device 11 can capture a plurality of images, e.g. a series of images, of the person or the object.

The unmanned vehicle 10 may further comprise an image processing device 12 configured to analyze the image in order to identify at least one security-relevant item in the image.

The image processing device 12 may comprise a combination of hardware and software components. For instance, the image processing device 12 is implemented by at least one computing device and/or processor, e.g. a microprocessor, executing an image processing software.

The unmanned vehicle 10 may in addition or alternatively comprise a communication interface which is configured to forward the imaging data and/or the generated image to an external processing system for image processing. The communication interface can be a wireless interface, such as a radio, a WiFi or a Bluetooth interface. The external processing system could be a central computer or server. Thus, the image generation and/or the image processing can be performed either by the unmanned vehicle itself or by the external system based on data forwarded by the vehicle (or by both).

For instance, the image processing device 12 and/or the external processing system are configured to execute an artificial intelligence model in order to identify the at least one security-relevant item in the captured image.

The artificial intelligence model can be a machine learning model, which is trained to identify security-relevant items in the image. The machine learning model can be trained by means of training data, e.g. labelled images captured in real-life scans and/or synthetic images. The artificial intelligence model can be a Convolutional Neural Network (CNN) or an object detection model.

For example, the artificial intelligence model is configured to determine the type of the security-relevant object and/or can identify the security-relevant item in the captured image.

The security-relevant item may be a prohibited item at the environment where the unmanned vehicle 10 is operated. The security-relevant item can be a threat object, such as a weapon (e.g., a knife or a gun), an explosive, or a contraband object (e.g., drugs). The security-relevant item can be an item on the person or the object, e.g., inside the object or hidden below clothing of the person. For instance, the object is a piece of luggage or a bag.

The unmanned vehicle 10 can be configured for security screening and handling. For example, the unmanned vehicle 10 transmits an alarm signal, e.g. an alarm sound, if a security-relevant item is detected.

Such an unmanned vehicle 10 can be used for security screening of people and objects in various different environments, in particular security-sensitive locations such as high-security areas (e.g., airports or shopping centers) or protected venues (e.g., concerts). The unmanned vehicle 10 may conduct screenings while passing by the persons or objects 13 in the environment, e.g., while passing by a queue or crowd of people.

The screening conducted by the vehicle 10 could also be a secondary screening, which is performed after a first screening by a fixed body-scanner. For instance, the vehicle 10 could scan specific body regions of a person according to an alarm raised by the first screening (e.g., sensitive regions like the groin area). This provides the additional advantage of posing less risk to security personnel which would otherwise perform such a pat down.

The captured image can further be processed to detect biometrics of a person, e.g., a body shape which may serve as a "finger print" of the person.

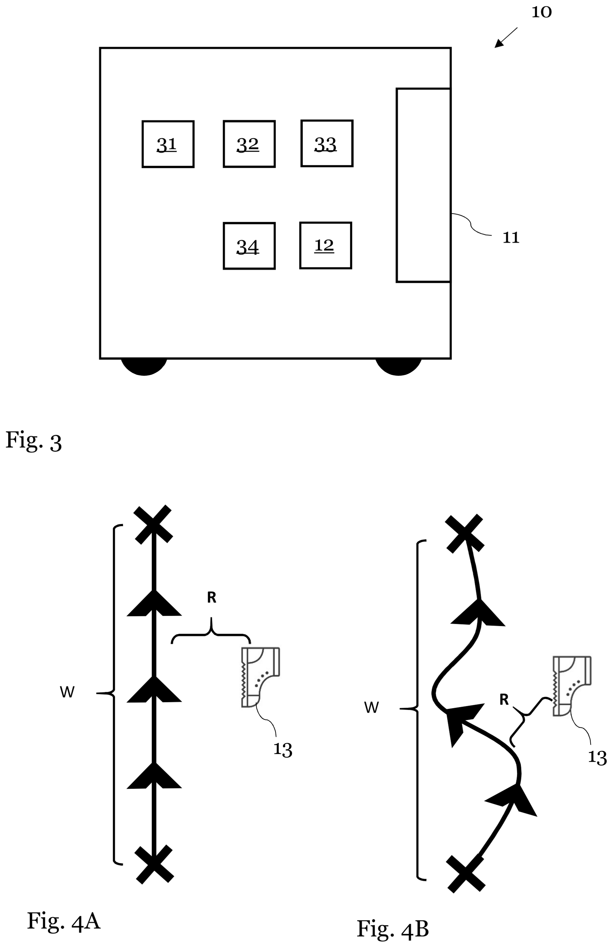

Figs 2 and 3 show exemplary embodiments of the unmanned vehicle 10, which build on the vehicle 10 shown in Fig. 1. Same elements are labelled with the same reference signs. Hereinafter, only the differences between Fig. 1 and Figs. 2 and 3 are explained.

Fig. 2 shows a schematic 3D model of the unmanned vehicle 10. The unmanned vehicle 10 is, for instance, a robot.

In the example shown in Fig. 2, the mmWave imaging device 11 comprises three vertically stacked antenna arrays. However, a different number or arrangement of such antenna arrays would also be possible.

The unmanned vehicle 10 may comprise a drive unit 21. When the vehicle is a ground based vehicle, as shown in Fig. 2, the drive unit 21 can comprise wheels connected to an electric drive. The drive unit 21 could also comprise tracks or legs for moving the vehicle 10 through the environment.

Alternatively, the unmanned vehicle 10 could be a drone which flies or hovers through the environment.

The vehicle 10, as shown in Fig. 2, can form an autonomous mobile robot platform equipped with imaging hardware which enables the screening of people or objects. This robot could replace a human security officer at significant lower operational cost. The robot could further interact with the screened persons, as will be explained below.

Fig. 3 shows a schematic diagram of the unmanned vehicle 10 according to an embodiment. In particular, Fig. 3 shows a number of further optional elements 31-34 of the vehicle 10. The vehicle 10 may comprise these elements 31-34 individually or in any combination.

For instance, the vehicle 10 can comprise at least one interface 31 configured to interact with the person or object, e.g., before or after a screening.

The at least one interface 31 can comprise a loudspeaker, a microphone, a screen, a touchscreen, a keyboard, and/or other hardware.

For instance, by means of the screen or loudspeaker, information (e.g., instructions to stand still) could be conveyed to a person to be screened. Different languages could thereby be used.

In addition or alternatively, the vehicle 10 can comprise at least one additional sensor 32 configured to capture an optical, an infrared and/or an ultrasound image of the at least one person or object.

These additional images could be combined with the mmWave image generated by the imaging device 11 (or the external system) to obtain additional information about the scanned persons/objects and/or about the environment.

Further, the unmanned vehicle 10 may comprises a localization device 33 configured to determine a location of the unmanned 10 vehicle in the environment.

For example, the localization device 33 comprises at least one (or any combination) of: an optical camera, an infrared camera, a satellite localization unit, a step engine, a simultaneous-localization-and-mapping (SLAM) unit, and a radar.

The vehicle 10 can use the information provided by the localization device in order to autonomously move through the environment, e.g. to identify its current position and/or to avoid obstacles. The vehicle 10 can have access to a map of the environment and can use the data from the localization device 33 to identify its position in the map.

For example, the unmanned vehicle 10 further comprises a processor 34 configured to execute at least one further artificial intelligence (AI) model.

The at least one further AI model can be used for different applications. For instance, one further AI model could be configured to control a movement of the unmanned vehicle 10 through the environment. The same or an additional further AI model could be used for localization of the vehicle in the environment (e.g., for simultaneous localization and mapping, SLAM). These further AI models could receive the output of the additional sensors 32 as an input. They could be continuously trained while the vehicle 10 moves through the environment (e.g., via self-learning) or from a dataset of labelled movement and/or location data.

A further AI model which is executed by the processor 34 may be configured to control an interaction of the unmanned vehicle 10 with the environment. This AI model could be a large language model (LLM), which outputs written or spoken language (e.g., instructions) and/or receives written or spoken language inputs (e.g., from people in the environment). The AI model could therefore be connected to the interface(s) 31 of the vehicle 10. This further AI model can be a part of an AI based human interaction system of the vehicle 10.

Each of Figs. 4A and 4B shows an exemplary movement path W of the unmanned vehicle 10. When following the movement path W, the vehicle passes by an object 13 to be scanned (in the shown example: a shoe). The minimal distance of the object 13 to the vehicle 10 is denoted by R.

The unmanned vehicle 10 can be configured to move along the movement paths W while acquiring imaging data of the object 13, e.g. mmWave signals reflected by the object 13.

The millimeter wave imaging device 11 can further be configured to generate the image by combining multiple received mmWave signals collected from different positions along the movement path W. In this way, the vehicle 10 could also screen a person or a number of persons while following a movement path past the person(s).

The movement path W could be straight as shown in Fig. 4A. However, the path W could also be curved as shown in Fig. 4B and/or comprise changes in altitude.

The millimeter wave imaging device 11 can be configured to generate the image using a synthetic-aperture radar (SAR) technique, an inverse synthetic-aperture radar (ISAR) technique, and/or a coherent or non-coherent superposition of received mmWave signals.

For instance, when using the SAR technique, the data recorded by the mmWave imaging device 11 at different locations can be processed coherently to generate microwave images of the screened scenario. For instance, by combining mmWave signals received at different locations and at different times, a synthetic (or virtual aperture) can be generated that can be much larger than the aperture of the physical antenna(s) of the imaging device 11. In this way, a higher resolution and or a better SNR (signal-to-noise ratio) compared to an image captured from a stationary position can be achieved.

In particular, when using the SAR technique, the unmanned vehicle 10 can utilize the location data which is e.g. gathered by the localization device 33. For instance, the location of the unmanned vehicle 10 could be known with an accuracy within a tenth of a wavelength of the mmWave radiation or with an even higher accuracy. For example, the vehicle 10 may drive any aperture of a given length of any shape with the imaging device 11 facing towards an area to be screened.

The processing of the recorded imaging data to generate the mmWave image can be performed by the unmanned vehicle 10 or at least partially by a central processing unit or external processing system.

Besides the mmWave radar images, the vehicle 10 can also apply the SAR principle to the optical or infrared images captured by the at least one additional sensor 32.

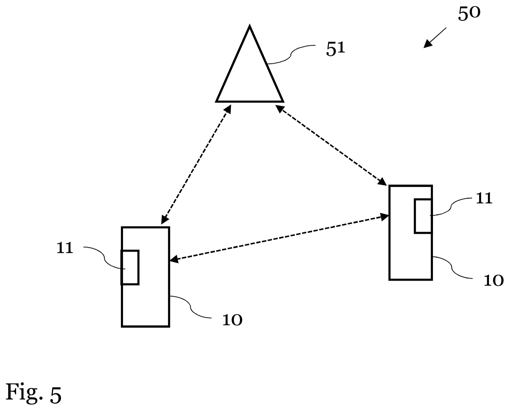

Fig. 5 shows a schematic diagram of a system 50 comprising at least two unmanned vehicles 10 according to an embodiment.

Thereby, the respective mmWave imaging device 11 of the at least two unmanned vehicles 10 can be configured to acquire the imaging data of the person or object in a synchronized manner. For instance, the vehicles can jointly capture an image of the at least one person or object in this way.

For example, the mmWave imaging device 11 of the vehicles can be synchronized with respect to a common clock. This synchronization may allow for a coherent overlay of the imaging data received by each mmWave imaging device 11.

The system 50 may comprise a plurality of unmanned vehicles 10 of different types, e.g. driving (robots) and flying (drones). The plurality of unmanned vehicles 10 may work together to scan people or objects in different areas of the environment.

The system 50 may further comprises a control station 51 configured to control and/or synchronize the at least two unmanned vehicles 10.

The instance, the control station 51 comprises or forms the aforementioned external processing system and may generate and/or analyze the images recorded by each vehicle 10.

The control station 51 could be mounted to a pole, to another drone or robot, or to a balloon.

The unmanned vehicle(s) 10 could regularly carry out a calibration of their respective mmWave imaging devices 11. For instance, during such a calibration, a vehicle 10 could point its imaging device 11 towards surfaces with known characteristics (e.g., mmWave reflecting or absorbing surfaces) and perform a calibration measurement. These calibration surfaces could be arranged in remote places of the environment, not accessible to the public.

Further, the vehicle(s) 10 could autonomously drive to respective charging stations to recharge an internal battery. This could be carried out according to a schedule and/or when a vehicle 10 detects that its battery is almost empty.

## Claims

1. An unmanned vehicle (10) for security screening,
wherein the unmanned vehicle (10) is configured to autonomously move through an environment; and
wherein the unmanned vehicle (10) comprises a millimeter wave imaging device (11) configured to acquire imaging data of at least one person or object (13) in the environment.

2. The unmanned vehicle (10) of claim 1,
wherein the millimeter wave imaging device (11) is configured to generate an image of the at least one person or object (13) based on the imaging data; and/or
wherein the unmanned vehicle (10) comprises a communication interface configured to forward the imaging data to an external processing system.

3. The unmanned vehicle (10) of claim 2, further comprising:
an image processing device (12) configured to analyze the image in order to identify at least one security-relevant item in the image.

4. The unmanned vehicle (10) of claim 3,
wherein the image processing device (12) is configured to execute an artificial intelligence model to identify the at least one security-relevant item in the image.

5. The unmanned vehicle (10) of any one of claims 2 to 4,
wherein the unmanned vehicle (10) is configured to move along a movement path (W) while acquiring the imaging data; and
wherein the millimeter wave imaging device (11) is configured to generate the image by combining imaging data collected from different positions along the movement path (W).

6. The unmanned vehicle (10) of claim 5,
wherein the millimeter wave imaging device (11) is configured to generate the image using any one of the following techniques: a synthetic-aperture radar, SAR, technique, an inverse synthetic-aperture radar, ISAR, technique, or a coherent or non-coherent superposition of received radar signals.

7. The unmanned vehicle (10) of any one of the preceding claims, further comprising:
at least one interface (31) configured to interact with the at least one person or object.

8. The unmanned vehicle (10) of claim 7,
wherein the at least one interface (31) comprises at least one of: a loudspeaker, a microphone, a screen, a touchscreen, and a keyboard.

9. The unmanned vehicle (10) of any one of the preceding claims, further comprising:
at least one additional sensor (32) configured to capture an optical, an infrared and/or an ultrasound image of the at least one person or object.

10. The unmanned vehicle (10) of any one of the preceding claims, further comprising:
a localization device (33) configured to determine a location of the unmanned vehicle in the environment.

11. The unmanned vehicle (10) of claim 10,
wherein the localization device (33) comprises at least one of: an optical camera, an infrared camera, a satellite localization unit, a step engine, a simultaneous-localization-and-mapping unit, and a radar.

12. The unmanned vehicle (10) of any one of the preceding claims,
wherein the unmanned vehicle (10) is a ground vehicle or an aerial vehicle.

13. The unmanned vehicle (10) of any one of the preceding claims, further comprising:
a processor (34) configured to execute at least one further artificial intelligence model configured to control a movement of the unmanned vehicle (10) through the environment and/or to control an interaction of the unmanned vehicle (10) with the environment.

14. A system (50) comprising at least two unmanned vehicles (10) according to any one of the preceding claims.

15. The system (50) of claim 14,
wherein the respective millimeter wave imaging devices (1) of the at least two unmanned vehicles (10) are configured to acquire imaging data of the at least one person or object in a synchronized manner.

16. The system (50) of claim 14 or 15, further comprising:
a control station (51) configured to control and/or synchronize the at least two unmanned vehicles (10).
